Europäisches Patentamt

European Patent Office

Office européen des brevets

(19)

(11) **EP 0 952 185 A1**

(12) **EUROPÄISCHE PATENTANMELDUNG**

(43) Veröffentlichungstag:
   **27.10.1999 Patentblatt 1999/43**

(51) Int. Cl.$^6$: **C08K 9/04**, C08L 21/00

(21) Anmeldenummer: **99107082.2**

(22) Anmeldetag: **12.04.1999**

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(30) Priorität: **24.04.1998 DE 19818552**

(71) Anmelder: **BAYER AG
   51368 Leverkusen (DE)**

(72) Erfinder:
   • **Scholl, Thomas Dr.
     51469 Bergisch Gladbach (DE)**
   • **Trimbach, Jürgen
     50859 Köln (DE)**

(54) **Mischungen aus Kautschuken und aktivierten und hydrophobierten oxidischen und silikatischen Füllstoffen und ein Verfahren zur Herstellung**

(57)    Die vorliegende Erfindung betrifft Kautschukmischungen enthaltend einen oder mehrere lösliche Kautschuke, hydrophobierte Füllstoffe und ein oder mehrere auf anorganischem und/oder organischem Trägermaterial aufgebrachte polysulfidische Silane, sowie ein Verfahren zu deren Herstellung. Die erfindungsgemäßen Kautschukmischungen eignen sich zur Herstellung von Formkörpern aller Art, insbesondere zur Herstellung von Reifen und Reifenlaufflächen, die einen niedrigen Rollwiderstand und einen hohen Abriebwiderstand aufweisen.

**Beschreibung**

Die vorliegende Erfindung betrifft Kautschukmischungen enthaltend einen oder mehrere lösliche Kautschuke, hydrophobierte Füllstoffe und ein oder mehrere auf anorganischem und/oder organischem Trägermaterial aufgebrachte polysulfidische Silane, sowie ein Verfahren zu deren Herstellung. Die erfindungsgemäßen Kautschukmischungen eignen sich zur Herstellung von Formkörpern aller Art, insbesondere zur Herstellung von Reifen und Reifenlaufflächen, die einen niedrigen Rollwiderstand und einen hohen Abriebwiderstand aufweisen.

Die Herstellung von kieselsäuregefüllten Kautschukmischungen erfordert im Vergleich zu rußgefüllten Kautschukmischungen einen deutlich höheren Mischaufwand Der höhere Mischaufwand für die Einarbeitung der Kieselsäure könnte demgegenüber prinzipiell vermieden werden, wenn die Kieselsäure in eine Kautschuklösung direkt nach der Herstellung des Kautschuks eingearbeitet würde. Die derzeitig zur Reifenherstellung eingesetzten Fällungskieselsäuren eignen sich jedoch nicht ohne Vorbehandlung für einen derartigen Prozeß, da sie bei der Entfernung des Lösungsmittels mit Wasserdampf nicht gefällt werden, sondern zu einem großen Teil in der Wasserphase verbleiben.

US-PS 5.166.227 beschreibt ein Verfahren zur Herstellung von kieselsäuregefüllten Emulsionskautschukmischungen, in dem eine Dispersion von Kieselsäure und ein Kautschuklatex gemeinsam sprühgetrocknet wird. Dieses Verfahren hat den Nachteil, daß das gesamte Wasser energieaufwendig verdampft werden muß. Die Kieselsäure ist darüberhinaus im Gegensatz zu den Kautschukmischungen der vorliegenden Erfindung nicht aktiviert.

Auf Trägermaterial aufgebrachte polysulfidische Silane, hergestellt durch Umsetzung von Halogensilanen mit Polysulfiden in Gegenwart eines Trägermaterials in Wasser beschreibt EP-761 742, wobei erwähnt wird, daß diese Materialien in ungetrocknetem Zustand auch zur Herstellung von Kautschuk/Füllstoff-Masterbatchen verwendet werden können. Es wurde jetzt neu gefunden, daß spezielle Anforderungen an den Füllstoff zur Herstellung von Kautschuk/Kieselsäure-Masterbatches zu stellen sind, die in EP-761 742 nicht erwähnt oder nahegelegt werden.

Es wurde jetzt gefunden, daß sich auf Trägermaterial aufgebrachte polysulfidische Silane, mit Kautschuklösungen und speziellen hydrophobierten oxidischen und/oder silikatischen Füllstoffen aufarbeiten lassen, ohne daß es zu Verlusten an Füllstoff im Abwasser kommt und daß die so erhaltenen Kautschukmischungen ein besseres Verarbeitungsverhalten zeigen, wie z.B. längere Verarbeitungszeit und geringere Viskosität. Die daraus hergestellten Formkörper besitzen überraschenderweise verbesserte dynamische Dämpfungseigenschaften und verbessertes Abriebverhalten. Die erfindungsgemäßen Kautschukmischungen eignen sich daher insbesondere zur Herstellung von Reifen und Reifenlaufflächen mit geringem Rollwiderstand und hoher Abriebfestigkeit.

Gegenstand der vorliegenden Patentanmeldung sind daher Kautschukmischungen enthaltend einen oder mehrere lösliche Kautschuke, 5 bis 500 Gew.-Teile hydrophobierte Füllstoffe und 0,1 bis 40 Gew.-Teile eines oder mehrerer auf anorganischem und/oder organischem Trägermaterial aufgebrachter polysulfidische Silane, wobei sich die angegebenen Gew.-Teile jeweils auf 100 Gew.-Teile Kautschuk beziehen.

Die auf anorganischem und/oder organischen Trägermaterial aufgebrachten polysulfidischen Silane werden gemäß EP-761 742 durch Reaktion von Halogenalkylsilanen (I), und gegebenenfalls organischen Halogenverbindungen (II), mit Polysulfiden (III) in Wasser in Gegenwart eines organischen und/oder anorganischen Trägermaterials, mit einem polysulfdisches Silan zu Träger-Gewichtsverhältnis von 0,1 bis 10, bei Temperaturen von 20 bis 220°C hergestellt, wobei das Molverhältnis der Komponenten (I):(II):(III) von der Zahl der gebundenen Halogenatome abhängig ist und in den Bereichen von 1,5 bis 3 mol gebundenem Halogen pro mol Polysulfid liegt. Die besagten polysulfidischen Silane werden bevorzugt als wäßrige Suspension eingesetzt.

Die einzusetzenden Halogenalkylsilane (I), organischen Halogenverbindungen (II) und Polysulfide (III) entsprechen den Formeln

$$R^1R^2R^3Si\text{-}X\text{-}(Hal)_n \tag{I}$$

$$Y\text{-}(Hal)_m \tag{II}$$

$$Me_2S_x \tag{III}$$

worin

$R^1$, $R^2$, $R^3$    gleich oder verschieden sind und für Chlor, $C_1$-$C_{18}$-Alkyl- oder $C_1$-$C_{18}$-Alkoxireste stehen, die gegebenenfalls durch Sauerstoff, Stickstoff oder Schwefelatome unterbrochen sein können, oder $C_6$-$C_{12}$-Aryl, -Aryloxi, $C_7$-$C_{18}$-Alkylaryl oder Alkylaryloxi bedeuten, mit der Maßgabe, daß mindestens einer der Reste $R^1$ bis $R^3$ eine Alkoxi, Aryl- oder Alkylaryloxigruppe oder ein Chloratom ist,

X    für lineare, verzweigte oder cyclische, gegebenenfalls ungesättigte $C_1$-$C_{18}$-Alkylenreste steht, die gegebenenfalls durch Sauerstoffatome unterbrochen sein können, und wobei 1-3 Wasserstoffatome durch Halogen ersetzt sein können.

Y        für einen ein- bis vierwertigen linearen, verzweigten, gegebenenfalls ungesättigten oder aromatischen $C_1$-$C_{36}$-Kohlenwasserstoffrest steht, der gegebenenfalls mit $C_6$-$C_{12}$-Aryl, $C_1$-$C_{12}$-Alkoxi, Hydroxi-, Cyano-, Amid, $C_1$-$C_{22}$-COO- oder $C_1$-$C_{22}$-OOC-Gruppen, Carbonsäure- oder Sulfonsäuregruppen sowie deren Salze substituiert sein kann sowie gegebenenfalls durch Sauerstoff, Stickstoff oder Schwefelatome unterbrochen sein kann oder für eine ein- bis dreiwertige Heteroarylgruppe steht.

m        für eine ganze Zahl von 1 bis 4 steht,

n        für eine ganze Zahl von 1 bis 3 steht,

x        eine ganze Zahl von 1 bis 8 bedeutet,

Hal        für Fluor, Chlor oder Brom steht und

Me        für Ammonium oder ein Metallatom steht.

Bevorzugte Halogensilane (I) sind z.B. 1-Chlormethyltrimethoxisilan, 1-Chlormethyltriethoxisilan, 1-Chlormethyltributoxisilan, 1-Chlormethyl-tri(ethoxiethoxi)-silan, 1-Chlormethyl-methyl-dimethoxisilan, 1-Chlormethyl-methyl-diethoxisilan, 1-Chlormethyl-methoxy-dibutoxisilan, 1-Chlormethyl-dimethyl-methoxisilan, 1-Chlormethyl-dimethyl-ethoxisilan, 1-Chlormethyl-dimethyl-butoxisilan, 3-Chlorpropyltrimethoxisilan, 3-Chlorpropyltriethoxisilan, 3-Chlorpropyltripropoxisilan 3-Chlorpropyltributoxisilan, 3-Chlorpropylpentoxisilan, 3-Chlorpropyltrihexoxisilan, 3-Chlorpropyltrioctoxisilan, 3-Chlorpropyl-triphenoxisilan, 3-Chlorpropylmethyldimethoxisilan, 3-Chlorpropyl-methyl-diethoxisilan, 3-Chlorpropyl-methyldibutoxisilan, 3-Chlorpropyl-dimethyl-methoxisilan, 3-Chlorpropyl-dimethylethoxisilan, 3-Chlorpropyl-diethyl-phenoxisilan. Besonders bevorzugt sind insbesondere 1-Chlormethyl-methyl-diethoxisilan und 3-Chlorpropyltriethoxisilan.

Bevorzugte organische Halogenverbindungen (II) sind z.B. Alkylmonohalogenide, wie Methylchlorid, Ethylchlorid, Propylchlorid, Butylchlorid, Herylchlorid, Octylchlorid, Decylchlorid, Dodecylchlorid, Octadecylchlorid, Benzylchlorid, Chorethanol, Chlorpropanol, Chloressigsäure und deren Alkallmetallsalze, Chlorpropionsäure und deren Alkalisalze, sowie Alkylendihalogenide, in denen Y für Methylen-, Ethylen-, Propylen-, 2-Hydroxipropylen-, Butylen, Hexylen, Cyclohexylen-, Octylen-, Decyclen-, Dodecyclen-, 2,2-Oxidiethylen-, Methylen-bis-(oxiethylen)-, Ethylen-(bisoxiethylen)-, 2,2-Thiodiethylen-, N-Methyl-N,N-diethylen- oder Xylidenreste steht. Besonders bevorzugt werden 1.2-Dichlorethan, 1.6-Dichorhexan, Bis-(2-chlorethyl)-formal und 1.2.3-Trichlorpropan. Die organischen Halogenverbindungen (II) können einzeln oder auch im Gemisch eingesetzt werden.

Bevorzugte Molverhältnisse der Halogenalkylsilane (I) zu weiteren organischen Halogenverbindungen (II) liegen bei 1 : 0 bis 1 : 100. Ganz besonders bevorzugte Verhältnisse liegen bei 1 : 0 bis 1 : 30.

Als Polysulfide (III) werden bevorzugt solche eingesetzt, in der Me für Ammonium, Lithium, Natrium oder Kalium steht.

Als Reaktionsmedium zur Herstellung der auf einem anorganischen und/oder organischen Träger aufgebrachten polysulfidischen Silane wird Wasser verwendet. Daneben können auch Gemische von Wasser mit organischen Lösungsmitteln verwendet werden, wie z.B. Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol, 1,6-Hexandiol, sowie Gemische mit aromatischen, aliphatischen oder cycloaliphatischen Kohlenwasserstoffen, wie z.B. Toluol, Cyclohexan, Hexan, Octan, oder offenkettige oder cyclische Ether, wie z.B. Diethylether, Dibutylether, Tetrahydrofuran, 1,3-Dioxolan.

Besonders geeignete organische und anorganische Trägermaterialien für die auf anorganischem und/oder organischem Träger aufgebrachten polysulfidischen Silane sind z.B.:

Ruße, die nach dem Flammruß-, Furnace- oder Gasruß-Verfahren hergestellt wurden und mit BET-Oberflächen von 1 bis 200 $m^2$/g, wie z.B. SAF-, ISAF-, IISAF-, HAF-, FEF- oder GPF-Ruße. Ferner hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 10 bis 400 $m^2$/g (BET-Oberfläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Ti- oxiden vorliegen. Synthetische Silikate, wie Aluminiumsilikat, Erdalkalisilikate, wie Magnesiumsilikat oder Calciumsilikat, mit BET-Oberflächen von 5 bis 400 m2/g und Primärteilchendurchmessern von 10 bis 400 nm. Natürliche Silikate, wie Kaolin und andere natürlich vorkommende Kieselsäuren, Metalloxide, wie Zinkoxid, Calciumoxid, Magnesiumoxid, Aluminiumoxid, Metallcarbonate, wie Magnesiumcarbonat, Calciumcarbonat, Zinkcarbonat, Metallsulfate, wie Calciumsulfat, Bariumsulfat, Metallhydroxide, wie Aluminiumhydroxid, Magnesiumhydroxid, Glasfasern und Glasfaserprodukte oder Mikroglaskugeln sowie Kautschukgele mit Primärteilchengrößen von 1 bis 2000 nm. Die genannten Trägermaterialien können alleine oder im Gemisch eingesetzt werden.

Die auf organischem oder inorganischem Träger aufgebrachten polysulfidischen Silane besitzen polysulfidisches Silan zu Träger-Gewichtsverhältnisse von 0,1 bis 10, bevorzugt 0,2 bis 5 (im getrockneten und salzfreien Zustand). Das Gewichtsverhältnis von polysulfidischem Silan zu Träger wird ermittelt indem das Reaktionsprodukt abfiltriert und bei 105° C getrocknet wird. Das Gewichtsverhältnis ergibt sich nach der Formel

Gewichtsverhältnis von polysulfidischem Silan zu Träger = (Gewicht des abfiltierten und getrockneten Produktes - Trägergewicht) / Trägergewicht

Die besagten Silane werden bevorzugt nach der Herstellung ohne Trocknung im wasserfeuchten Zustand weiterverarbeitet, sie können jedoch auch mit den üblichen Methoden, wie z.B. Sprühtrocknung, Spin-flash-Trocknung, im Drehrohrofen oder mittels Bandtrockner unter Normaldruck oder im Vakuum bei Temperaturen von Raumtemperatur bis ca. 250°C entwässert werden.

Das Molverhältnis der Komponenten (I) : (II) : (III) ist abhängig von der Zahl gebundener Halogenatome in den Ausgangsverbindungen (I) und (II) und beträgt pro mol Polysulfid (III) 1,5 bis 3 mol reaktives (Mono-)Halogenid. Es wird idealerweise so gewählt, daß pro mol Polysulfid 2 mol (Mono-) Halogenid umgesetzt werden. Die angegebenen Molverhältnisse beziehen sich auf Monohalogenverbindungen. Beim Einsatz von Polyhalogenverbindungen muß das Verhältnis von Polysulfid zu Polyhalogenverbindung entsprechend umgerechnet werden. Die genannten Molverhältnisse gelten nur für gegenüber Polysulfiden in wässriger Lösung reaktive Halogenverbindungen.

Werden Halogenalkylsilane (I) eingesetzt, in denen einer oder mehrere der Reste $R^1$ bis $R^3$ für ein Chloratom steht, so empfiehlt sich die Zugabe einer Base, wie z.B. NaOH, KOH, $Ca(OH)_2$, $Na_2CO_3$ oder $K_2CO_3$, um die freiwerdende Salzsäure zu neutralisieren.

Die Reaktionstemperaturen liegen bei 0 bis 200°C, gegebenfalls kann unter Druck gearbeitet werden. Die Reaktionszeiten liegen zwischen wenigen Minuten bis zu 48 Stunden. Im Anschluß an die Reaktion kann das Reaktionsprodukt abfiltriert, durch Wäsche von wasserlöslichem Metallhalogenid befreit und getrocknet werden.

In einer besonders bevorzugten Ausführungsform wird das Reaktionsprodukt nicht abfiltiert und nicht getrocknet sondern in der anfallenden Rohform zur Herstellung der Kautschukmischungen in die Mischung aus Kautschuklösung und hydrophobiertem Füllstoff eingemischt.

Unter dem Begriff hydrophobierte Füllstoffe werden Füllstoffe verstanden, die im getrockneten Zustand (Trocknungsverlust nach DIN ISO 787 /2 bei 105°C < 1 Gew.-%) bei Raumtemperatur nicht von Wasser benetzt werden. Bevorzugte hydrophobierte Füllstoffe besitzen im getrockneten Zutand eine Methanolbenetzbarkeit von 1 - 60 Gew.-%, bevorzugt 5 bis 50 Gew.-%. Die Methanolbenetzbarkeit gibt hierbei den Mindestgehalt (in Gewichtsprozent) an Methanol in einem Methanol/Wasser-Gemisch an, das in der Lage ist, den Füllstoff zu benetzen.

Die Bestimmung der Methanolbenetzbarkeit wird wie folgt ausgeführt:

200 mg der Kieselsäure und 50 ml Wasser werden in einen 250 ml Rundkolben mit Magnetrührer gegeben. Die hydrophobierte Kieselsäure bleibt an der Wasseroberfläche. Anschließend taucht man die Spitze einer mit Methanol gefüllten Meßpipette in die flüssige Phase (um einen direkten Kontakt mit der Kieselsäure zu vermeiden) und läßt das Methanol langsam zufließen. Dabei wird mit dem Magnetrührer gerührt, so daß in der Flüssigkeit ein Wirbel entsteht. Es wird solange Methanol zugegeben, bis die Festsubstanz benetzt ist. Dies ist der Fall, wenn die Kieselsäure nicht mehr über die Oberfläche der flüssigen (bereits Methanol enthaltenden) Phase verteilt ist, sondern von dem Wasser/Methanolgemisch benetzt ist und die relativ klare filmfreie Flüssigkeit sichtbar wird.

Auswertung: Die Angabe der Methanolbenetzbarkeit erfolgt in Gew.-% Methanol der Methanol/Wasser-Mischung nach der Formel

Methanolbenetzbarkeit (in Gew.-%) = (0,79 x Anzahl ml MeOH / 0,79 x Anzahl ml MeOH + 50) x 100.

In der Literatur sind zahlreiche geeignete Hydrophobierungsmethoden für oxidische und silikatische Füllstoffe beschrieben, wie z.B. die Behandlung von Fällungskieselsäuren und -silikaten mit anorganischen und organischen Fluoriden, wie in US-PS 2.477.695 und 2.625.492 beschrieben, oder die Herstellung oder Nachbehandlung von Fällungskieselsäuren durch Neutralisation von Silikatlösungen mit Organohalogensilanen, wie z.B. Dimethyldichlorsilan (DE-AS 1.229.504). Eine weitere Methode zur Hydrophobierung in wäßriger Dispersion ist die Nachbehandlung von Fällungskieselsäuren mit Organosilanen (EP 849.320, US-PS 5.763.388) und Alkylaminosilanen, wie z.B. 3-(Octadecenylamino)-propyl-triethoxisilan oder N-Oleyl-N-(3-trimethoxisilyl)propyl-ammoniumchlorid (WO 98/53004) in Wasser.

Die Hydrophobierung kann in wässriger Suspension, in organischem Lösungsmittel oder im trockenen Zustand durchgeführt werden. Bevorzugt wird die Hydrophobierung in wässrigem Medium oder lösungsmittelfrei durchgeführt. Besonders bevorzugte Hydrophobierungsmethode in wässrigem Medium ist die Hydrophobierung mit Alkylaminosilanen, insbesondere 3-(Octadecenylamino)-propyl-triethoxisilan oder N-Oleyl-N-(3-trimethoxisilyl)propyl-ammoniumchlorid gemäß dem Verfahren der WO 98/53004. Die hydrophobierten Füllstoffe können in trockener Form, als wäßrige Dispersion oder als Dispersion in organischen Lösungsmitteln eingesetzt werden.

Besonders gut geeignet sind hydrophobierte Füllstoffe, ausgehend von oxidischen und/oder silikatischen Füllstoffen, die

(A) vor, während oder nach einer Trocknungsbehandlung mit 0,5 bis 200, bevorzugt 1 bis 50 Gew.-Teilen, bezogen auf 100 Gew.-Teile Füllstoff, einer wasserunlöslichen organischen Verbindung versetzt wurden oder

(B) vor, während oder nach einer Trockungsbehandlung unter teilweiser oder vollständiger Umsetzung der Silanolgruppen mit 0,5 bis 200, bevorzugt 1 bis 50 Gew.-Teilen, bezogen auf 100 Gew.-Teile Füllstoff, einer hydroxylgruppenhaltigen Verbindung zur Reaktion gebracht wurden oder

(C) vor, während oder nach einer Trocknungsbehandlung unter teilweiser oder vollständiger Umsetzung der Silanolgruppen mit 0,1 bis 50, bevorzugt 0,1 bis 10 Gew.-Teilen, bezogen auf 100 Gew.-Teile Füllstoff einer reaktiven Siliciumverbindung zur Reaktion gebracht wurden.

Als oxidische und/oder silikatische Füllstoffe sind alle bekannten natürlichen oder synthetischen Füllstoffe der entsprechenden Art zu verstehen. Dies sind beispielsweise: gefällte oder pyrogene Kieselsäure, Aluminiumhydroxid, Aluminiumsilikat, Calciumsilikat, Calciumsulfat, China Clay und Calcinierter Clay.

Besonders bevorzugt sind:

- hochdisperse Kieselsäuren, hergestellt z.B. durch Fällung von Lösungen von Silikaten oder Flammenhydrolyse der Silikate, von Siliciumhalogeniden mit spezifischen Oberflächen von 5-1000, vorzugsweise 20-400 m2/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen.

- Synthetische Silikate, wie Aluminiumsilikat, Erdalkalisilikate, wie Magnesiumsilikat oder Calciumsilikat, mit BET-Oberflächen von 20-400 $m^2$/g und Primärteilchendurchmessern von 10-400 nm.

- Natürliche Silikate, wie Kaolin und andere natürlich vorkommende Kieselsäuren

- Glasfasern und Glasfaserprodukte (Matten, Stränge) oder Mikroglaskugeln

- Metalloxide, wie Zinkoxid, Calciumoxid, Magnesiumoxid, Aluminiumoxid

- Metallcarbonate, wie Magnesiumcarbonat, Calciumcarbonat, Zinkcarbonat

- Metallhydroxide, wie Aluminiumhydroxid, Magnesiumhydroxid.

Die erfindungsgemäß zu verwendenden hydrophobierten Füllstoffe können nach Methode (A) hergestellt werden, in dem der silikatische und/oder oxidische Füllstoff vor, während oder nach einem Trocknungsprozess, in dem der Wassergehalt bevorzugt auf weniger als 3 Gew.-%, besonders bevorzugt < 1 Gew.-%, abgesenkt wird, mit einer wasserunlöslichen organischen Verbindung gemischt wird. Unter dem Wassergehalt des Füllstoffs wird derjenige Gehalt an physikalisch gebundenem Wasser verstanden, der bei einer Trocknungstemperatur von 105°C entfernt werden kann (DIN ISO 787 / 2). Geeignete wasserunlösliche Verbindungen sind z.B. ungesättigte und gesättigte Fettsäuren und Wachse, wie in DE-OS 2.419.759 beschrieben, synthetische Weichmacher, wie Phthalsäuredioctylester, Adipinsäureester, modifizierte Fettsäuren, wie dimerisierte und oligomerisierte Fettsäuren, natürliche ungesättigte Öle, wie Olivenöl, Rapsöl, Rizinusöl, Sonnenblumenöl, Baumwollsaatöl, Leinöl, Erdnußöl, deren Oligomerisierungsprodukte sowie die entsprechenden ungesättigten und hydrierten Fettsäuren und deren Umesterungsprodukte mit ein- bis sechswertigen $C_1$-$C_{22}$-Alkoholen, wie naphthenische, paraffinische und aromatische Mineralöle, wasserunlösliche Alkohole, wie z.B. Octanol, Dodecanol, Stearylalkohol, Undecenylalkohol und Oleylalkohol, synthetische Öle, wie z.B. Schmieröle auf Polyester oder Polyetherbasis, Silikonöle, wie z.B. Polydimethylsiloxane, Schwefel und Dialkylpolysulfide, wie z.B. Dioctylpolysulfid, Addukte von Schwefel an ungesattigten Ölen und ungesättigte Fettsäureestern, wie z.B. Umsetzungsprodukte von Schwefel mit Oleylalkohol, Olivenöl, Rapsöl oder Rizinusöl, niedermolekulare Kautschuke, insbesondere Polybutadienöl, niedermolekulares Butadien/Acrylniril-Copolymer, Polyisobutylen, flüssiger Naturkautschuk. Darüberhinaus können unter Verwendung von Lösungsmitteln oder in Latexform auch hochmolekulare Kautschuke, wie Natur-

EP 0 952 185 A1

kautschuk, Butadienkautschuk, Styrol/Butadien-Kautschuk, Acrylnitril/Butadien-Kautschuk und Thermoplaste verwendet werden. Bevorzugte Molekulargewichte liegen zwischen 150 und 10.000.

Besonders bevorzugte Verbindungen sind natürliche ungesättigte Öle, wie Olivenöl, Rapsöl, Rizinusöl, Sonnenblumenöl. Baumwollsaatöl, Leinöl, Erdnußöl, deren Oligomerisierungs-, Umesterungs- und Hydrierungsprodukte sowie die entsprechenden ungesättigten und hydrierten Fettsäuren und deren Veresterungsprodukte mit ein bis sechswertigen $C_1$-$C_{30}$-Alkoholen. Die Verbindungen können alleine oder im Gemisch eingesetzt werden.

Die Verbindungen können in Substanz, in Lösung oder als Latex auf den silikatischen oder oxidischen Füllstoff aufgetragen werden. Bevorzugt werden sie lösungsmittelfrei oder als wäßrige Dispersion aufgetragen. Der silikatische und/oder oxidische Füllstoff selber kann als wäßrige Dispersion oder wasserfeuchter Filterkuchen oder in vergetrockneter Form vorgelegt werden. Eine Auttragungsmethode für erfindungsgemäß zu verwendende Wachse und Thermoplaste aus wäßriger Dispersion während oder unmittelbar nach dem Fällprozeß von Fällungskieselsäuren ist beispielsweise in US-PS 3.607.337 beschrieben. Die Trocknung kann in beispielsweise durch Sprühtrocknung, im Drehrohrofen oder mittels Bandtrockner erfolgen.

Die erfindungsgemäß zu verwendenden hydrophobierten Füllstoffe können nach Methode (B) hergestellt werden, in dem der silikatische und/oder oxidische Füllstoff vor, während oder nach einem Trocknungsprozess, in dem der Wassergehalt auf weniger als 3 Gew.-%, bevorzugt < 1 Gew.-%, abgesenkt wird, mit einer hydroxylgruppenhaltigen Verbindung zur Reaktion gebracht wird. Bevorzugte hydroxylgruppenhaltige Verbindungen sind Octanol, 1-Decanol, Undecenylalkohol, Dodecanol, Dodecenalkohol, Hexadecanol, Hexadecenol, Octadecanol, Behenylalkohol, Oleylalkohol, Ricinolsäure, Zimtalkohol, Ricinusöl, Hydroxiethyl-(meth)-acrylat, 4-Hydroxibutyl-(meth)-acrylat, hydroxylgruppenhaltiges Polybutadienöl mit bevorzugten OH-Zahlen von 20 - 200 (Poly BD Resins der Elf Atochem oder Hycar HT der BFGoodrich), hydroxygruppenhaltige ungesättigte Polyester mit mittleren Molgewichten von 1.000 bis 20.000, hydroxylgruppenhaltige hydrophobe Polyether, wie z.B. Additionsprodukte aus 1 - 200 mol Propylenoxid pro mol Alkohol. Besonders bevorzugte Alkohole sind, $C_8$-$C_{36}$-Alkyl-monoalkohole und $C_5$-$C_{36}$-Alkyl-polyole, insbesondere n- und iso-Octylakohol, Nonanol, Decanol, Dodecanol, Octadecylakohol, Octadecenylalkohol, Neopentylglykol und Trimethylolpropan.

Die Verbindungen können alleine oder im Gemisch eingesetzt werden oder auch im Gemisch mit den Verbindungen, herstellbar nach Methode (A), die dann gegebenenfalls an den Füllstoff nur physikalisch gebunden werden.

Die Umsetzung der Füllstoffe mit den hydroxylgruppenhaltigen Verbindungen kann in Substanz oder in organischen Lösungsmitteln oder im Vakuum bei Temperaturen oberhalb von Raumtemperatur (20°C) bis unterhalb der Zersetzungstemperatur der hydroxylgruppenhaltigen Verbindungen erfolgen.

Zur Durchführung der Veresterung bei Temperaturen unter 100°C empfiehlt sich eine vorherige Hitzebehandlung des oxidischen oder silikatischen Füllstoffs bei Temperaturen von 300 bis 800°C, wie sie in US-PS 2,736,669 beschrieben ist. Ansonsten werden Temperaturen von 100°C bis unterhalb der Zersetzungstemperatur der hydroxylgruppenhaltigen Verbindung bevorzugt. Die oxidischen und/oder silikatischen Füllstoffe können auch als wasserfeuchte Produkte oder gar als Aufschlämmung in Wasser vorgelegt werden. Die Restfeuchte wird mit dem bei der Reaktion gebildeten Wasser aus dem Reaktionsprodukt entfernt. Die Entfernung des Reaktionswassers geschieht vorteilhafterweise sofort während der Reaktion oder in einem nachgeschalteten Trocknungsschritt. Der Erfolg der Veresterung läßt sich beispielsweise dadurch nachweisen, daß sicht mit geeigneten Lösungsmitteln die hydroxylgruppenhaltige Verbindung nicht mehr extrahieren läßt.

Geeignete Lösungsmittel zur Durchführung der Oberflächenreaktion mit den Verbindungen sind beispielsweise gesättigte oder ungesättigte, aliphatische oder aromatische Kohlenwasserstoffe, chlorierte aliphatische oder chlorierte aromatische Kohlenwasserstoffe und Alkohole.

Die erfindungsgemäß zu verwendenden hydrophobierten Füllstoffe können nach Methode (C) hergestellt werden, in dem der silikatische und/oder oxidische Füllstoff vor, während oder nach einem Trocknungsprozess, in dem der Wassergehalt bevorzugt auf weniger als 3 Gew.-%, besonders bevorzugt < 1 Gew.-%, abgesenkt wird, mit einer gegenüber Si-OH-Gruppen des Füllstoffs reaktiven Siliciumverbindung zur Reaktion gebracht wird.

Die hierbei zu verwendenden Siliciumverbindungen sind Alkoxi-Silane, wie z.B. Tetramethoxi- und Tetraethoxisilan, Alkylalkoxisilane, wie Octyl-trimethoxi- und Octyltriethoxisilan, Octadecyltriethoxisilan, Dimethyldiethoxisilan, Trimethylethoxisilan, Polydimethylsiloxane mit reaktiven Si-OH-Gruppen und mit reaktiven Alkoxisilylethergruppen, wie z.B. Methoxi- und Ethoxireste, cyclische Dimethylsiloxanether, wie Octamethylcyclotetrasiloxan, Trimethylsilylamine, wie Hexamethyldisilazan oder schwefelhaltige Silylether, insbesondere Bis-(trialkoxisilyl-alkyl)-polysulfide, wie in DE 2.141.159 und DE-AS 2.255.577 beschrieben, oligomere und/oder polymere schwefelhaltige Silylether der DE-OS 4.435.311 und EP-A 670.347, Mercapatoalkyltrialkoxisilane, insbesondere Mercaptopropyltriethoxisilan, Thiocyanatoalkylsilylether, wie z.B. in DE-OS 19.544.469 beschrieben. Ganz besonders bevorzugt werden $C_6$-$C_{18}$-Alkylalkoxisilane, Polydimethylsiloxane mit reaktiven Si-OH-Gruppen und cyclische Dimethylsiloxanether, wie Octamethylcyclotetrasiloxan etc. Die Menge der einzusetzenden Siliciumverbindung richtet sich nach deren Wirksamkeit und ist anhand von Vorversuchen leicht zu ermitteln. Sie liegt zwischen 0,1 bis 50 Gew.-Teile, bevorzugt 0,1 bis 10 Gew.-Teile, besonders bevorzugt zwischen 0,1 bis 5 Gew.-Teile bezogen auf 100 Gew.-Teile oxidischen und/oder silikatischen Füllstoff.

Die Reaktionstemperaturen hierfür liegen zwischen Raumtemperatur und der Zersetzungstemperatur der Siliciumverbindung. Die Reaktion kann gegebenenfalls durch saure oder alkalische Katalysatoren beschleunigt werden. Beispiele hierfür sind Ammoniak und Natriumalkoholat.

Weiterhin ist Gegenstand der Erfindung ein Verfahren zur Herstellung der erfindungsgemäßen Kautschukmischungen, das dadurch gekenzeichnet ist, daß man 0,1 bis 40 Gew.-Teile auf anorganischem und/oder organischem immobilisierte polysulfidische Silane, mit einem Silan zu Träger-Verhältnis von 0,1 bis 10, mit einer Kautschuklösung, die gegebenenfalls weitere Hilfsmittel für die Aufarbeitung, Verarbeitung und Stabilisierung sowie zusätzliche Füllstoffe enthalten kann, und 5 bis 500 Gew.-Teilen hydrophobiertem Füllstoff mischt und das Lösungsmittel und Wasser bei Temperaturen von 50 bis 250°C entfernt. Die Gew.-Teile beziehen sich hierbei jeweils auf 100 Gew.-Teile Kautschuk.

Das erfindungsgemäße Verfahren wird in der Weise durchgeführt, daß man eine Kautschuklösung mit 5 bis 500 Gew.-Teilen (bezogen auf 100 Gew.-Teile Kautschuk) eines hydrophobierten bevorzugt oxidischen und/oder silikatischen Füllstoffs sowie mit 0,1 bis 40 Gew.-Teilen eines polysulfidischen Silans auf einem Trägermaterial in Form einer wässrigen Suspension versetzt und anschließend das Lösungsmittel bei Temperaturen von 50-200°C, gegebenenfalls im Vakuum oder unter Druck von 0 bis 10 atm, entfernt. Bevorzugt wird das Lösungsmittel mittels Wasserdampfdestillation entfernt. Die hydrophobierten Füllstoffe können in trockener Form, als wäßrige Dispersion oder als Dispersion in organischen Lösungsmitteln eingesetzt werden. In dem Gemisch aus Kautschuk, Lösungsmittel, Silan und Füllstoff können weitere Hilfsmittel für die Aufarbeitung, Verarbeitung und Stabilisierung sowie weitere Füllstoffe enthalten sein, wie z.B. Entschäumer, Weichmacher, Antioxidantien, Ruße, Kautschukgele, nichthydrophobierte oxidische oder silikatische Füllstoffe etc.

Zur Herstellung der Kautschuklösungen für das erfindungsgemäße Verfahren eignen sich lösliche Naturkautschuke und Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

| | |
|---|---|
| BR | - Polybutadien |
| ABR | - Butadien/Acrylsäure-C1-4-alkylester-Copolymere |
| CR | Polychloropren |
| IR | - Polyisopren |
| SBR | - Styrol/Butadien-Copolymerisate mit Styrolgehalten von 1-60, vorzugsweise 20-50 Gew.-% |
| IIR | - Isobutylen/Isopren-Copolymerisate |
| NBR | - Butadien/Acrylnitril-Copolmere mit Acrylnitrilgehalten von 5-60, vorzugsweise 10-40 Gew.-% |
| HNBR | - teilhydrierter oder volllständig hydrierter NBR-Kautschuk |
| EPDM | - Ethylen/Propylen/Dien-Copolymerisate |

sowie Mischungen dieser Kautschuke. Für die Herstellung von Kfz-Reifen mit Hilfe der auf anorganischem und/oder organischem Träger immobilisierten polysulfidischen Silane und der hydrophobierten Füllstoffe sind insbesondere Naturkautschuk, synthetisches Polyisopren, Emulsions-SBR sowie Lösungs-SBR-Kautschuke mit einer Glastemperatur oberhalb von -50°C, die ggf. mit Silylethern oder anderen funktionellen Gruppen, modifiziert sein können, wie z.B. in der EP-A 447.066 beschrieben, Polybutadienkautschuk mit hohem 1.4-cis-Gehalt (> 90 %), der mit Katalysatoren auf Basis Ni, Co, Ti oder Nd gerestellt wird, sowie Polybutadienkautschuk mit mit einem Vinylgehalt von 0 -75 % sowie deren Mischungen von Interesse.

Der gelöste Kautschuk kann in einer besonders bevorzugten Ausführungsform des erfindungsgemäßen Verfahrens während der Entfernung des Lösungsmittels in Wasser koaguliert werden, beispielsweise durch Eintropfen der Kautschuklösung in heißes Wasser oder durch gemeinsames Verdüsen der Kautschuklösung mit Wasserdampf und Fällen in Wasser.

Als Lösungsmittel zum Lösen der erfindungsgemäß einsetzbaren Kautschuke kommen insbesondere aliphatische, cycloaliphatische und aromatische Lösungsmittel in Frage. Kohlenwasserstoffe mit 2 bis 12 Kohlenstoffatomen werden besonders bevorzugt, wie n-Butan, iso-Butan, n- und iso-Pentan, Hexan, Cyclohexan, Propen, 1-Buten, trans-2-Buten, 1-Penten, 2-Penten, 1-Hexen, 2-Hexen, Benzol, Toluol, Xylol, Ethybenzol. Die Lösungsmittel können einzeln oder im Gemisch eingesetzt werden.

Der Gehalt an Kautschuk in der Lösung liegt hierbei bei 0,5 bis 50 Gew.-% und ist vor allem durch die Viskosität der Lösung limitiert. Der Gehalt an Kautschuk sollte aus ökonomischen Gründen möglichst hoch sein. Besonders bevorzugte Konzentrationen liegen im Bereich von 5 bis 35 Gew.-% Kautschuk.

Besonders bevorzugte Gehalte an hydrophobiertem Füllstoff liegen bei 20 bis 125 Gew.-Teile pro 100 Gew.-Teile Kautschuk.

Zur Verbessetung der Fließfähigkeit empfiehlt sich ferner der Zusatz eines Weichmachers, insbesondere eines paraffinischen, naphthenischen oder aromatischen Weichmachers, in Mengen von 1 bis 100 Gew.-Teilen, bezogen auf 100 Gew.-Teile Kautschuk. Ganz besonders bevorzugt werden aromatische Weichmacher in Mengen von 5 bis 75 Gew.-Teilen eingesetzt.

Ganz besonders vorteilhaft eignet sich das erfindungsgemäße Verfahren zur Herstellung von hellgefüllten Lösungs-SBR-, Lösungs-Polybutadien- und Lösungs-Polyisopren-Mischung, da diese nach der Herstellung im selben Lösungsmittel weiterverarbeitet werden können und besonders gute reifentechnische Eigenschaften zeigen.

Ein weiterer Gegenstand der Erfindung ist die Verwendung der erfindungsgemäßen Kautschukmischungen zur Herstellung von Formkörpern aller Art.

Formkörper im Sinne der Erfindung sind z.B. Kabelmäntel, Schläuche, Treibriemen, Förderbänder, Walzenbeläge, Reifen, Schuhsohlen, Dichtungsringe und Dämpfungselemente und ganz besonders bevorzugt rollwiderstandsarme Reifenlaufflächen.

Zur Herstellung von Formkörpern aus den erfindungsgemäßen Kautschukmischungen (Masterbatches) können noch weitere Kautschuke - entsprechend der zuvor erwähnten - und Kautschukhilfsprodukte zugemischt werden, insbesondere weitere Dienkautschuke, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, Trimethylolpropan, oder schwefelhaltige Silylether die in der Gummiindustrie bekannt sind. Den Kautschukmischungen können auch weitere Füllstoffe zugemischt werden. Dies sind neben hydrophobierten und nichthydrophobierten oxidischen und/oder silikatischen Füllstoffen, entsprechend der zuvor erwähnten, auch Kautschukgele und/oder Ruße. Die hierbei zu verwendenden Ruße sind nach dem Flammruß, Furnace- oder Gasrußverfahren hergestellt und besitzen BET-Oberflächen von 20 bis 200 $m^2$/g, wie z.B. SAF-, ISAF-, HAF-, FEF- oder GPF-Ruße.

Die Kautschukhilfsmittel werden in üblichen Mengen, die sich unter anderem nach dem Verwendungszweck richten, eingesetzt. Übliche Mengen sind z.B. Mengen von 0.1-50 Gew.-% bez. auf Gesamtmenge an Kautschuk.

Als Vernetzer bei der Herstellung von Formkörpern können Schwefel, Schwefelspender oder Peroxide eingesetzt werden. Die erfindungsgemäßen Kautschukmischungen können darüberhinaus Vulkanisationsbeschleuniger enthalten. Beispiele für geeignete Vulkanisationsbeschleuniger sind Mercaptobenzthiazole, Guanidine, Thiurame, Dithiocarbamate, Thioharnstoffe und Thiocarbonate. Die Vernetzungsbeschleuniger und Schwefel oder Peroxide werden in Mengen von 0.1 bis 10 Gew.-%, bevorzugt 0.1 bis 5 Gew.-%, bezogen auf Gesamtmenge an Kautschuk, eingesetzt.

Die Abmischung der erfindungsgemäßen Kautschukmischungen mit gegebenenfalls weiteren Kautschuken und Kautschukhilfsmitteln kann in üblichen Mischaggregaten, wie Walzen, Innenmischern und Mischextrudern, durchgeführt werden.

Die Vulkanisation kann bei Temperaturen von 100-200°C, bevorzugt 130 bis 180°C, ggf. unter Druck von 10-200 bar, erfolgen.

## Beispiele

### Beispiel 1a: Mit Ricinusöl hydrophobierte Kieselsäure

550 g Vulkasil® S (hochaktive gefällte Kieselsäure mit BET-Oberfläche 180 $m^2$/g der Bayer AG) und 27,5 g Ricinusöl wurden in einem Dreihalskolben mit Rührwerk und Destillationsbrücke 4 Stunden unter Rühren in einem Ölbad auf 220°C Ölbadtemperatur erhitzt, wobei Wasser abdestillierte. Man erhielt 546 g eines weißen Pulvers. Die auf diese Weise hydrophobierte Kieselsäure wird im Gegensatz zum Ausgangsprodukt von Wasser nicht benetzt und besitzt eine Methanolbenetzbarkeit von 15 Gew.-%.

### Beispiel 1b: Polysulfidisches Silan auf Kieselsäure-Träger:

9,81 g (0,074 mol) $Na_2S$ x 3 $H_2O$ (Natriumsulfid-Triyhdrat) und 7,13 g (0,223mol) Schwefel werden in 200 ml Wasser bei 70°C gelöst. Dann rührt man 40 g gefällte Kieselsäure Vulkasil® C (aktive gefällte Kieselsäure der Bayer AG, BET-Oberfläche 50 $m^2$/g) ein und setzt 35,83 g (0,149 mol) 3-Chlorpropyltriethoxisilan hinzu. Anschließend wird 8 Stunden bei 85°C nachgerührt. Man erhält eine gelbliche viskose Suspension mit einem Gehalt von 40 g schwefelhaltigem Silan auf 40 g Kieselsäure (Gewichtsverhältnis von polysulfidischem Silan zu Kieselsäure-Träger nach Filtration und Trocknung bei 105° C: 0,9). Diese Suspension wird ohne Filtration und Trocknung zur Herstellung von Kautschukmischungen weiterverarbeitet.

8

**Beispiel 1c: Kautschukmischung aus**

100 phr L-SBR Buna VSL 5025-0
37,5 phr aromatischem Mineralöl
92 phr hydrophobierte Kieselsäure gemäß Beispiel 1a
8 phr polysulfidisches Silan auf
8 phr Kieselsäure gemäß Beispiel 1b

500 g Lösungs-Styrol/Butadien-Kautschuk Buna[®] VSL 5025-0 (Bayer AG) mit einem Gehalt an gebundenem Styrol von 25 Gew.-% und einem 1.2-Vinyl-Gehalt von 50 Gew.-% sowie 2,5 g Vulkanox[®] BKF (Phenolisches Antioxidans, Bayer AG) wurden in 4 l Cyclohexan gelöst. Dann rührte man 187,5 g aromatisches Mineralöl Renopal 450 (Fuchs Mineralölwerke), 460 g der hydrophobierten Kieselsäure aus Beispiel 1a und den gesamten wässrigen Reaktionsansatz des immobilisierten schwefelhaltigen Silans aus Beispiel 1b ein und destillierte das Lösungsmittel bei 80°C Badtemperatur durch Einleiten Wasserdampf (100-110°C) ab. Dauer: 3 Stunden. Nach dem Abtrennen erhielt man ein feuchtes krümeliges Produkt, in dem die Kieselsäure von Kautschuk gleichmäßig umschlossen war. Das Abwasser war klar und frei von Kieselsäure. Die getrocknete Ausbeute betrug 1221 g (99,5 % der Theorie).

**Beispiel 2: (Vergleichsbeispiel)**
**Kautschukmischung aus**

100 phr L-SBR Buna VSL 5025-0
37,5 phr aromatischem Mineralöl
92 phr Kieselsäure Vulkasil S
8 phr polysulfidisches Silan auf
8 phr Kieselsäure gemäß Beispiel 1b

Es wurde wie in Beispiel 1c verfahren, wobei jedoch statt der hydrophobierten Kieselsäure aus Beispiel 1a eine (unmodifizierte) hochaktive gefällte Kieselsäure mit einer BET-Oberfläche von 180 m$^2$/g (Vulkasil[®] S, Bayer AG) eingesetzt wurde. Ergebnis: Das Abwasser war stark getrübt und der größte Teil der Kieselsäure hatte sich dort abgelagert. Die Ausbeute betrug 930 g (75,6 % der Theorie).

**Beispiel 3: Vulkanisate**

Die folgende Kautschukmischung wurde in einem 1,5 Kneter bei 140°C mit 5 Minuten Mischzeit hergestellt. Schwefel und Beschleuniger wurden anschließend auf der Walze bei 50°C zugegeben. Die angegebenen Mengen beziehen sich auf Gewichtsteile.

| | Beispiel 3a (Vergleich) | Beispiel 3b (erfindungsgemäß) |
|---|---|---|
| Ölverstreckte Kautschuk/Kieselsäure-Mischung gemäß Bsp. 1c | 0 | 245,5 |
| L-SBR-Kautschuk Buna® VSL 5025-0 (Bayer AG) | 100 | 0 |
| Kieselsäure Vulkasil® S (Bayer AG) | 100 | 0 |
| Silan Si 69 (Degussa AG) | 7,6 | 0 |
| aromat. Mineralöl Renopal 450 (Fuchs Mineralölwerke) | 37,5 | 0 |
| Zinkoxid | 2,5 | 2,5 |
| Stearinsäure | 1 | 1 |
| Antioxidans Vulkanox® HS (Bayer AG) | 1 | 1 |
| Antioxidans Vulkanox® 4020 (Bayer AG) | 1 | 1 |
| Ozonschutzwachs Antilux® 654 (Rheinchemie) | 1,5 | 1,5 |
| Schwefel | 1,5 | 1,5 |
| Beschleuniger Vulkacit® CZ (Bayer AG) | 1,8 | 1,8 |
| Beschleuniger Vulkacit® D (Bayer AG) | 2 | 2 |
| | | |
| Mooney-Anvulkanisationszeit MS-t5 / 130°C (Minuten)[1] | 15 | 31 |

[1] gemessen mit Monsanto MDR 2000 nach DIN 53 523

Die Kautschukmischungen wurden anschließend 35 Minuten bei 170°C vulkanisiert. Man erhielt folgende mechanische Eigenschaften:

| | Beispiel 3a (Vergleich) | Beispiel 3b (erfindungsgemäß) |
|---|---|---|
| Bruchdehnung (%)[2]: | 284 | 280 |
| Zugfestigkeit (MPa)[2]: | 17,1 | 16,6 |
| Spannungswert bei 100 % Dehnung (MPa)[2]: | 5 | 4,7 |
| Rückprallelastizität bei 23°C (%)[3] | 14 | 15 |
| Rückprallelastizität bei 70°C (%)[3] | 43 | 43 |
| Härte bei 23°C (Shore A)[4] | 80 | 79 |
| | | |
| Abrieb nach DIN 53 516 (ccm) | 150 | 121 |

[2] gemessen mittels Zugversuch nach DIN 53 504 mit Normstab 2
[3] gemessen nach DIN 53 512
[4] gemessen nach DIN 53 505

Aus den Resultaten wird deutlich, daß die erfindungsgemäße Kautschukmischung 3b ein deutlich verbessertes Verarbeitungsverhalten zeigt (längere Anvulkanisationszeit) und das Vulkanisat zusätzlich signifikante Verbesserungen im Abriebverhalten aufweist.

**Beispiel 4a: Polysulfidisches Silan auf Kieselsäure-Träger:**

13,6 g (0,104 mol) Natriumsulfid-trihydrat und 10 g (0,313 mol) Schwefel wurden in 160 ml Wasser eine Stunde auf 70° C erhitzt sodaß eine klare Lösung entsteht. Dann setzte man bei 85° C Innentemperatur 32 g Vulkasil N (hochaktive Kieselsäure der Bayer AG, BET-Oberfläche 130 m$^2$/g) und anschließend 12,5 g (0,052 mol) 3-Chlorpropyl-triethoxisilan sowie 13,5 g (0,078 mol) Bis-(2-chlorethyl)-formal hinzu und erhitzte 10 Stunden auf 85 - 95° Innentemperatur. Man erhielt 241,6 g einer hellen Dispersion mit einem Gehalt von 0,026 mol polysulfidischem Silan (entsprechend 32 g polysulfidischem Silan auf 32 g Trägermaterial). (Gewichtsverhältnis von polysulfidischem Silan zu Kieselsäure-Träger nach Filtration und Trocknung bei 105° C: 0,95). Die Suspension wird ohne Filtration und Trocknung zur Herstellung von Kautschukmischungen weiterverarbeitet.

**Beispiel 4b: Mit N-Oleyl-N-(trimethoxisilyl)propylammoniumchlorid hydrophobierte und mit immobilisertem Silan 4a aktivierte Kieselsäure**

In einem Rührgefäß wurde 1394,60 g vollentsalztes Wasser vorgelegt und 348,65 g HiSil 233 (hochaktive gefällte Kieselsäure der PPG Industries, USA mit BET-Oberfläche 130m2/g) zugegeben. Durch Rühren wurde eine 20%ige Kieselsäure-Suspension hergestellt, die anschließend auf 50°C erwärmt wurde. Zu dieser Suspension wurde innerhalb von 1 Minute unter Rühren 1,85 g N-Oleyl-N-(trimethoxysilyl)propyl ammonium chlorid und 14,21 g 2%ige Natronlauge zugegeben. Anschließend wurde unter Rühren innerhalb 30 Minuten 222,49 g der Silan/Träger-Suspension aus Beispiel 4a zugesetzt und 30 Minuten nachgerührt. Durch diese Zugabe gelangten 30,3 g polsulfidisches Silan und 30,3 g Vulkasil N in die HiSil 233-Suspension. Danach wurde die HiSil 233-Suspension auf 80°C aufgeheizt und innerhalb 5 Minute 17,10 g N-Oleyl-N-(trimethoxysilyl)propyl ammonium chlorid und 13,26 g 10%ige Natronlauge zugesetzt und 5 Minute nachgerührt. Bestimmung der Methanolbenetzbarkeit der Kieselsäure: Hierzu wurde der Versuch ohne die Silan/Träger-Suspension aus Beispiel 4a wiederholt, die Kieselsäure abfiltiert und bei 105° C bis zur Gewichtskonstanz getrocknet. Methanolbenetzbarkeit: 40 Gew. %.

**Beispiel 4c: Kautschukmischung aus**

137,5 phr L-SBR Buna VSL 5025-1
73,6 phr Kieselsäure HiSil 233
6,4 phr polysulfidisches Silan auf
6,4 phr Kieselsäure Vulkasil S gemäß Beispiel 4b
4 phr N-Oleyl-N-(trimethoxysilyl)propyl ammonium chlorid

651,35 g VSL 5025-1 (ölverstreckter Lösungs-SBR der Bayer AG) wurden in 1892,99 g DHN 50 (Hexan-Gemisch, Hersteller Exxon) unter Rühren gelöst. In 2544,34 g der hergestellten Lösung sind 473,71 g Polymer und 177,64 g arom. Öl enthalten. Anschließend wurden 2,37 g (0,5 phr) Stabilisator Vulkanox 4020 (Bayer AG) zugesetzt.
Zur stabilisierten Polymerlösung wurde die aktivierte und hydrophobierte Kieselsäure-Suspension gegeben und 1 Stunde gerührt. Die homogene Mischung wies einen kleinen Anteil einer klaren wäßrigen Phase auf, d.h. die hydrophobierte und aktivierte Kieselsäure ist von der organischen Phase aufgenommen worden.
Die homogene Mischung wurde mit 500 ml vollentsalztem Wasser versetzt und durch Einleiten von Dampf unter Rühren das Lösungsmittel entfernt. Nach der Entfernung des Lösungsmittels lag der Masterbatch in Form von 0,5 bis 1 cm großen Krümeln vor. Die Wasserphase wies nur eine sehr leichte Trübung auf. Der nasse Masterbatch wurde mittels Sieb isoliert und bei 70°C im Vakuumtrockenschrank getrocknet.
Die Wasserphase wurde über ein Filter gegeben und der Rückstand getrocknet. Der getrocknete Rückstand betrug 1,54% der insgesamt eingesetzten Kieselsäure, d.h. 98,46% der insgesamt eingesetzten Kieselsäure befindet sich im Kautschuk/Kieselsäure-Masterbatch.

**Beispiel 5: Kautschukmischung aus**

100 phr Polybutadienkautschuk Buna CB 24
37,5 phr aromatischem Mineralöl
73,6 phr Kieselsäure HiSil 233
6,4 phr polysulfidisches Silan auf

**6,4 phr Kieselsäure Vulkasil S und**

**4 phr N-Oleyl-N-(trimethoxysilyl)propyl ammonium chlorid**

Es wurde wie in Beispiel 4c verfahren wobei anstelle der SBR-Kautschuklösung folgende Polybutadienkautschuklösung verwendet wurde:

| Polymerlösung: | 473,71 g Polybutadienkautschuk Buna CB 24 (Bayer AG) |
| | 177,64 g aromatisches Mineraöl Renopal 450 (Fuchs) |
| | 1550,69 g DHN 50 (techn. Hexan-Gemisch der Exxon) |
| | 2,37 g Vulkanox 4020 (Bayer) |

Nach der Entfernung des Lösungsmittels lag die Kautschuk/Kieselsäure-Mischung in Form von 0,5 cm großen Krümeln vor und enthielt mehr als 99 Gew. % der eingesetzten Kieselsäure. Die Wasserphase wies nur eine geringe Trübung auf. Die feuchte Kautschuk/Kieselsäure-Mischung wurde bei 70° C im Vakuumtrockenschrank getrocknet

**Beipiel 6: Vulkanisate**

Die folgende Kautschukmischung wurde in einem 1,5 Kneter bei 140°C mit 5 Minuten Mischzeit hergestellt. Schwefel und Beschleuniger wurden zum Schluß auf der Walze bei 50°C zugegeben. Die angegebenen Mengen beziehen sich auf Gewichtsteile.

| | Beispiel 6a (Vergleich) | Beispiel 6b (erfindungsgemäß) |
|---|---|---|
| L-SBR-Kautschuk Buna® VSL 5025-1 (Bayer | 96,3 | 0 |
| BR-Kautschuk Buna® CB 24 (Bayer AG) | 30 | 0 |
| Kieselsäure Vulkasil® S (Bayer AG) | 80 | 0 |
| Silan Si 69 (Degussa AG) | 6,4 | 0 |
| L-SBR / Kieselsäure-Mischung Beispiel 4c | 0 | 159,3 |
| BR / Kieselsäure-Mischung gem. Beispiel 5 | 0 | 68,4 |
| aromat. Mineralöl Enerthene 1849-1 (BP) | 9 | 0 |
| Zinkoxid | 3 | 3 |
| Stearinsäure | 1 | 1 |
| Antioxidans Vulkanox® HS (Bayer AG) | 1 | 1 |
| Antioxidans Vulkanox® 4020 (Bayer AG) | 1 | 1 |
| Ozonschutzwachs Antilux® 654 (Rheinchemie) | 1,5 | 1,5 |
| | | |
| Schwefel | 1,5 | 1,5 |
| Beschleuniger Vulkacit® CZ (Bayer AG) | 1,8 | 1,8 |
| Beschleuniger Vulkacit® D (Bayer AG) | 2 | 2 |
| | | |
| | Beispiel 6a (Vergleich) | Beispiel 6b (erfindungsgemäß) |
| Mooney Viskosität ML 1+4 (100° C) [1] | 82 | 67 |

[1] gemessen mit Monsanto MDR 2000 nach DIN 53 523

Die Kautschukmischungen wurden anschließend 15 Minuten bei 170°C vulkanisiert. Man erhielt folgende mechanische Eigenschaften:

|  | Beispiel 6a (Vergleich) | Beispiel 6b (erfindungs-gemäß) |
|---|---|---|
| Bruchdehnung (%)[2]: | 380 | 405 |
| Zugfestigkeit (MPa)[2]: | 19,1 | 18,3 |
| Spannungswert bei 100 % Dehnung (MPa)[2]: | 3,4 | 3 |
| Spannungswert bei 300 % Dehnung (MPa)[2]: | 13,9 | 13 |
| Rückprallelastizität bei 23°C (%)[3] | 26 | 26 |
| Rückprallelastizität bei 70°C (%)[3] | 53 | 57 |
| Härte bei 23°C (Shore A)[4] | 73 | 68 |
| Goodrich Heat built up (°C) | 15,8 | 14,7 |
| Abrieb nach DIN 53 516 (ccm) | 166 | 166 |

[2] gemessen mittels Zugversuch nach DIN 53 504 mit Normstab 2
[3] gemessen nach DIN 53 512
[4] gemessen nach DIN 53 505

Die Prüfergebnisse zeigen bei den erfindungsgemäß hergestellten Kautschukmischungen eine erheblich niedrige Mischungsviskositiät ML 1+4; die erfindungsgemäßen Kautschukmischungen lassen sich demnach erheblich einfacher verarbeiten. Darüberhinaus weisen die nach dem erfindungsgemäßen Verfahren hergestellten Vulkanisate Vorteile in der Rückprallelastizität bei 70° C und im Goodrich Heat built up (Erwärmung bei dynamischer Beanspruchung) auf, die erfahrungsgemäß mit einem niedrigen Rollwiderstand bei Reifen korrelieren.

## Patentansprüche

1. Kautschukmischungen enthaltend einen oder mehrere lösliche Kautschuke, 5 bis 500 Gew.-Teile hydrophobierte Füllstoffe und 0,1 bis 40 Gew.-Teile eines oder mehrerer auf anorganischem und/oder organischem Trägermaterial aufgebrachte polysulfidische Silane, wobei sich die angegebenen Gew.-Teile jeweils auf 100 Gew.-Teile Kautschuk beziehen.

2. Kautschukmischungen gemäß Anspruch 1, dadurch gekennzeichnet, daß der eingesetzte lösliche Kautschuk ein in Lösung polymerisiertes Polybutaden, Styrol/Butadien-Copolymer, Isobutylen/Isopren-Copolymer, Ethylen/Propylen/Dien-Copolymer, Polyisopren oder Naturkautschuk ist.

3. Kautschukmischungen gemäß Anspruch 1, dadurch gekennzeichnet, daß man als hydrophobierte Füllstoffe oxidische und/oder silikatische hydrophobierte Füllstoffe verwendet.

4. Kautschukmischungen gemäß Anspruch 1, dadurch gekennzeichnet, daß die Füllstoffe im getrockneten Zustand bei Raumtemperatur nicht von Wasser benetzt werden und eine Methanolbenetzbarkeit von 1 bis 60 Gew. % besitzen.

5. Kautschukmischungen gemäß Anspruch 3, dadurch gekennzeichnet, daß die oxidischen und/oder silikatischen Füllstoffe in Wasser hydrophobiert werden.

6. Kautschukmischungen gemäß Anspruch 3, dadurch gekennzeichnet, daß die oxidischen und/oder silikatischen Füllstoffe im trockenen Zustand hydrophobiert werden.

7. Kautschukmischungen gemäß Anspruch 1, dadurch gekennzeichnet, daß die auf anorganischem und/oder organischem Trägermaterial immobilisierten polysulfidischen Silane durch Umsetzung von Halogenalkylsilanen (I), und gegebenenfalls organischen Halogenverbindungen (II) mit Polysulfiden (III) in Wasser in Gegenwart eines organischen und/oder anorganischen Trägermaterials hergestellt werden, wobei man bei Temperaturen von 20 bis 220°C arbeitet, und wobei das Molverhältnis der Komponenten (I) : (II) : (III) von der Zahl der gebundenen Halogenatome abhängig ist und in den Bereichen von 1,5 bis 3 mol gebundenem Halogen pro mol Polysulfid liegt und das polysulfidische Silan zu Träger-Gewichtsverhältnis 0,1 bis 10 beträgt.

8. Kautschukmischungen gemäß Anspruch 1, dadurch gekennzeichnet, daß die einzusetzenden Halogenalkylsilane (I), organischen Halogenverbindungen (II) und Polysulfide (III) den folgenden Formeln entsprechen

$$R^1R^2R^3Si\text{-}X\text{-}(Hal)_n \qquad\qquad (I)$$

$$Y\text{-}(Hal)_m \qquad\qquad (II)$$

$$Me_2S_x \qquad\qquad (III)$$

worin

$R^1$, $R^2$, $R^3$      gleich oder verschieden sind und für Chlor, $C_1$-$C_{18}$-Alkyl- oder $C_1$-$C_{18}$-Alkoxireste stehen, die gegebenenfalls durch Sauerstoff, Stickstoff oder Schwefelatome unterbrochen sein können, oder $C_6$-$C_{12}$-Aryl, -Aryloxi, $C_7$-$C_{18}$-Alkylaryl oder Alkylaryloxi bedeuten, mit der Mßagabe, daß mindestens einer der Reste $R^1$ bis $R^3$ eine Alkoxi, Aryloxi- oder Alkylaryloxigruppe oder ein Chloratom ist,

X      für lineare, verzweigte oder cyclische, gegebenenfalls ungesättigte $C_1$-$C_{18}$-Alkylenreste steht, die gegebenenfalls durch Sauerstoffatome unterbrochen sein können und wobei 1-3 Wasserstoffatome durch Halogen ersetzt sein können.

Y      für einen ein- bis vierwertigen linearen, verzweigten, gegebenenfalls ungesättigten oder aromatischen $C_1$-$C_{36}$-Kohlenwasserstoffrest steht, der gegebenenfalls mit $C_6$-$C_{12}$-Aryl, $C_1$-$C_{12}$-Alkoxi, Hydroxi-, Cyano-, Amid, $C_1$-$C_{22}$-COO- oder $C_1$-$C_{22}$-OOC-Gruppen, Carbonsäure- oder Sulfonsäuregruppen sowie deren Salze substituiert sein kann sowie gegebenenfalls durch Sauerstoff, Stickstoff oder Schwefelatome unterbrochen sein kann oder für eine ein- bis dreiwertige Heteroarylgruppe steht.

m      für eine ganze Zahl von 1 bis 4 steht,

n      für eine ganze Zahl von 1 bis 3 steht

x      eine ganze Zahl von 1 bis 8 bedeutet,

Hal      für Fluor, Chlor oder Brom steht und

Me      für Ammonium oder ein Metallatom steht.

9. Verfahren zur Herstellung von Kautschukmischungen gemäß Anspruch 1, dadurch gekenzeichnet, daß man die auf anorganischem und/oder organischem Trägermaterial aufgebrachten polysulfidische Silane mit einer Kautschuklösung und hydrophobiertem Füllstoff mischt und das Lösungsmittel und Wasser bei Temperaturen von 50 bis 250°C entfernt.

10. Verfahren gemäß Anspruch 9, dadurch gekennzeichnet, daß die Kautschuklösung weitere Hilfsmittel für die Aufarbeitung und/oder die Verarbeitung und/oder die Stabilisierung sowie gegebenenfalls weitere Füllstoffe enthält.

11. Verfahren gemäß Anspruch 9, dadurch gekennzeichnet, daß das Lösungsmittel mit Wasserdampf entfernt wird.

12. Verwendung von Kautschukmischungen gemäß Anspruch 1 zur Herstellung von Formkörpern aller Art, insbesondere Reifenlaufflächen oder Reifen.

Europäisches
Patentamt

**EUROPÄISCHER RECHERCHENBERICHT**

Nummer der Anmeldung

EP 99 10 7082

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | EP 0 753 549 A (BAYER AG)<br>15. Januar 1997 (1997-01-15)<br>* Zusammenfassung; Ansprüche *<br>--- | 1-12 | C08K9/04<br>C08L21/00 |
| Y | J.SCHNETGER: "Lexikon der Kautschuktechnik"<br>1991 , HÜTHIG BUCH VERLAG , HEIDELBERG<br>XP002110690<br>* Verstärkungsadditive *<br>* Seite 714 - Seite 716 *<br>--- | 1-12 | |
| A | EP 0 721 971 A (BRIDGESTONE CORP)<br>17. Juli 1996 (1996-07-17)<br>* Zusammenfassung; Ansprüche; Tabellen *<br>--- | 1 | |
| A | DE 197 39 475 A (TOYO TIRE & RUBBER CO)<br>12. März 1998 (1998-03-12)<br>* Zusammenfassung; Ansprüche; Tabellen *<br>--- | 1 | |
| P,X,<br>D | WO 98 53004 A (BAYER INC ;KOSKI AHTI (CA))<br>26. November 1998 (1998-11-26)<br>* Zusammenfassung; Ansprüche; Beispiele *<br>----- | 1-12 | |

RECHERCHIERTE
SACHGEBIETE (Int.Cl.6)

C08K

Der vorliegende Recherchenbericht wurde für alle Patentansprüche erstellt

| Recherchenort | Abschlußdatum der Recherche | Prüfer |
|---|---|---|
| DEN HAAG | 29. Juli 1999 | Mettler, R-M |

EPO FORM 1503 03.82 (P04C03)

EP 0 952 185 A1

ANHANG ZUM EUROPÄISCHEN RECHERCHENBERICHT
ÜBER DIE EUROPÄISCHE PATENTANMELDUNG NR.

EP 99 10 7082

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-1999

| Im Recherchenbericht angeführtes Patentdokument | Datum der Veröffentlichung | Mitglied(er) der Patentfamilie | Datum der Veröffentlichung |
|---|---|---|---|
| EP 0753549 A | 15-01-1997 | DE 19549034 A<br>CA 2179866 A<br>JP 9012922 A<br>US 5780531 A | 02-01-1997<br>29-12-1997<br>14-01-1997<br>14-07-1998 |
| EP 0721971 A | 17-07-1996 | JP 8245838 A | 24-09-1996 |
| DE 19739475 A | 12-03-1998 | JP 10087896 A<br>US 5896904 A | 07-04-1998<br>27-04-1999 |
| WO 9853004 A | 26-11-1998 | CA 2205789 A<br>AU 7516598 A | 22-11-1998<br>11-12-1998 |